# EUROPEAN PATENT APPLICATION

(11) **EP 2 760 232 A1**
(43) Date of publication of application: **30.07.2014**
(21) Application number: 14151545.2
(22) Date of filing: 17.01.2014
(51) Int. Cl.: H04W 12/08, H04L 12/24, H04W 88/08

(54) **Configuration method for network system**

(30) Priority: 28.01.2013 TW 102103171
(71) Applicant: Compal Broadband Networks Inc., 114 Taipei City (TW)
(72) Inventor: Huang, Ching-Hsi, 30265 Hsinchu County (TW); Yu, Chung-Huei, 30265 Hsinchu County (TW)
(74) Representative: Becker Kurig Straus

(57) **Abstract**

A configuration method for a network system including a master device and a slave device is disclosed. The configuration method includes broadcasting a notify configured count packet via the master device, receiving the notify configured count packet via the slave device to check whether the notify configured count packet equals a predetermined notify configured count packet, generating a request configured content packet via the slave device if the notify configured count packet does not equal the predetermined notify configured count packet, receiving and decrypting the request configured content packet via the master device to correspondingly generate a response configured content packet, and receiving and decrypting the response configured content packet via the slave device to share a network utilized by the master device.

## Description

### Field of the Invention

The application relates to a configuration method for a network system, and more particularly, to a configuration method which adaptively sets a network operation of a slave device to share the Internet service of a master device according to the pre-characterizing clauses of claim 1.

### Background of the Invention

As the technology advances, network communication devices have been rapidly developed to provide fast and convenient Internet services. People find it easy to access various network services through routers, gateways, or other transmission channels, such as cable TV, digital subscriber line (xDSL) technologies, optical fibers or wireless networks, etc. For utilizing the local area network (LAN), users can have higher LAN coverage via a plurality of base stations (or wireless access points), where the plurality of base stations (or wireless access points) are coupled to each other via the Ethernet or the power line communication (PLC). In the meanwhile, the plurality of base stations (or wireless access points) share the same certification mechanism and password, such as the service set identification (SSID). When a user operates a mobile device, such as a platform or a smart phone, in the LAN, the mobile device will dynamically detect and connect to one of the plurality of base stations (or wireless access points) providing the strongest wireless signal transmission. Once a security operation is processed to change/amend the certification password, the user must manually amend the configuration for each base station (or wireless access point) to result in inconvenient utilization/operation.

Alternatively, the user can utilize the plurality of base stations (or wireless access points) equipped with functions of the wireless distribution system (WDS), such that all the base stations (or wireless access points) can simultaneously connect to the LAN or the Internet. However, the user must manually alter/adjust the configuration for each base station (or wireless access point) while processing the security operation, which also is inconvenient for the user.

Therefore, it is necessary to provide a configuration method for a network system which automatically and simultaneously sets the certification mechanism and password for a plurality of base stations (or wireless access points) to effectively improve network configuration efficiency.

### Summary of the Invention

This in mind, the application aims at providing a configuration method for a network system to solve the above mentioned problems.

This is achieved by a configuration method for a network system according to claim 1. The dependent claims pertain to corresponding further developments and improvements.

As will be seen more clearly from the detailed description following below, the claimed configuration method for a network system including a master device and a slave device is disclosed. The configuration method includes broadcasting a notify configured count packet via the master device, receiving the notify configured count packet via the slave device to check whether the notify configured count packet equals a predetermined notify configured count packet, generating a request configured content packet via the slave device if the notify configured count packet does not equal the predetermined notify configured count packet, receiving and decrypting the request configured content packet via the master device to correspondingly generate a response configured content packet, and receiving and decrypting the response configured content packet via the slave device to share a network utilized by the master device.

In another aspect, as will be seen more clearly from the detailed description following below, the claimed computer system coupled to a network system including a master device and a slave device is disclosed. The computer system includes a central processing unit, and a storage device coupled to the central processing unit storing a programming code, and the programming code is utilized to instruct the central processing unit to process a configuration method, the configuration method including broadcasting a notify configured count packet via the master device, receiving the notify configured count packet via the slave device to check whether the notify configured count packet equals a predetermined notify configured count packet, generating a request configured content packet via the slave device if the notify configured count packet does not equal the predetermined notify configured count packet, receiving and decrypting the request configured content packet via the master device to correspondingly generate a response configured content packet, and receiving and decrypting the response configured content packet via the slave device to share a network utilized by the master device.

### Brief Description of the Drawings

In the following, the invention is further illustrated by way of example, taking reference to the accompanying drawings thereof:;
FIG. 1 illustrates a schematic diagram of a network system according to an embodiment of the present invention,
FIG. 2 illustrates a flow chart of a configuration process according to an embodiment of the present invention,
FIG. 3 illustrates a flow chart of a master device configuration process according to an embodiment of the present invention, and
FIG. 4 illustrates a flow chart of a slave device configuration process according to an embodiment of the present invention.

### Detailed Description

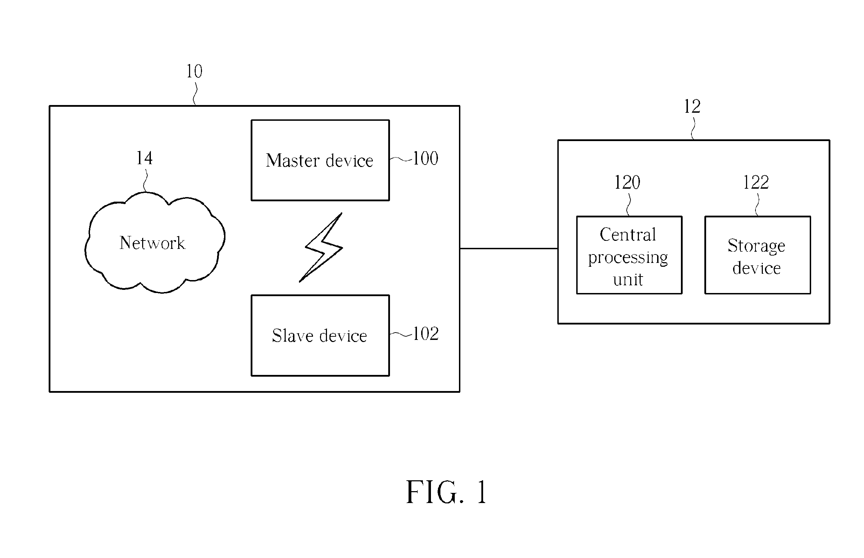

Please refer to FIG. 1, which illustrates a schematic diagram of a network system 10 according to an embodiment of the present invention. As shown in FIG. 1, the network system 10 comprises a master device 100, a slave device 102 and a network 14, and the network 14 is coupled to a computer system 12. Preferably, the master device 100 and the slave device 102 each are realized as a wireless local area network (WLAN) access point (e.g. a Wi-Fi AP) or a base station to correspondingly receive a plurality of network packets from the network 14. The master device 100 and the slave device 102 utilize a local area network (LAN) to process wireless/wired signal transmission, such as Ethernet or power line communication (PLC). The computer system 12 comprises a central processing unit 120 and a storage device 122. The storage device 122 is utilized to store a programming code (not shown in the figure) instructing the central processing unit 120 to process a configuration method of the network system 10. Concerning a connection between the network system 10 and the computer system 12 in the embodiment, the computer system 12 controls the related configurations of the network system 10 via the programming code, and the computer system 12 receives a plurality of network packets of the network 14 via the network system 10 (i.e. the master device 100 and the slave device 102). Alternatively, a plurality of hardware switches can be installed between the computer system 12 and the master device 100 (or the slave device 102), and the user adaptively turns on/off the plurality of hardware switches to process a turning on/off operation thereof. Besides, the user can directly utilize a network transmission line to connect the computer system 12 and the master device 100 (or the slave device 102), such that another programming code can be operated to adaptively control the related switching mechanism thereof.

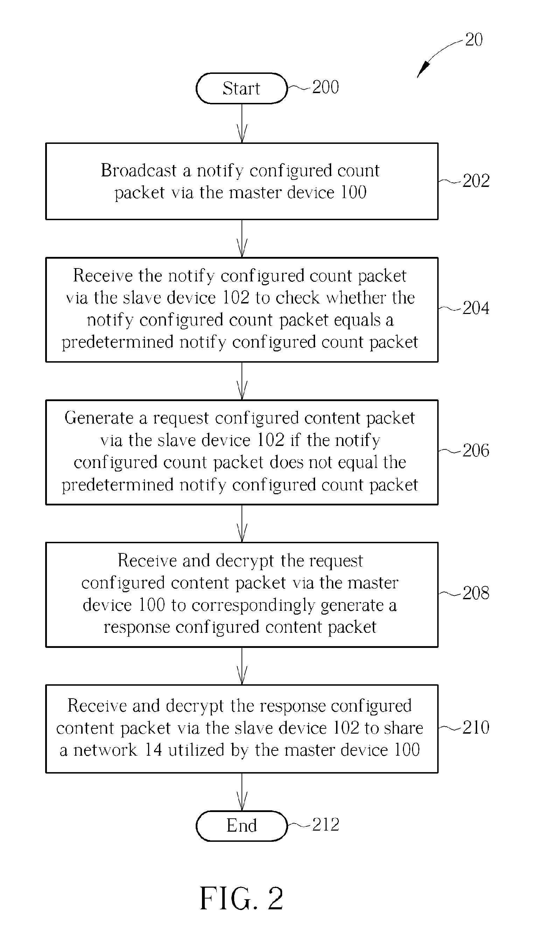

In simple, the embodiment of the invention utilizes the programming code in the computer system 12 to correspondingly control the slave device 102 to share a plurality of packets with the master device 100 after the master device 100 is connected to the network 14 and the slave device 102 is connected to the LAN, such that the slave device 102 will finish a connection operation with the network 14. Further, the configuration method for the network system 10 and the computer system 12 can be summarized as a configuration process 20 to be compiled as the programming code in the storage device 122, as shown in FIG. 2, so as to adaptively control related operations of the network system 10 and the computer system 12. The configuration process 20 includes the following steps.
Step 200: Start.
Step 202: Broadcast a notify configured count packet via the master device 100.
Step 204: Receive the notify configured count packet via the slave device 102 to check whether the notify configured count packet equals a predetermined notify configured count packet.
Step 206: Generate a request configured content packet via the slave device 102 if the notify configured count packet does not equal the predetermined notify configured count packet.
Step 208: Receive and decrypt the request configured content packet via the master device 100 to correspondingly generate a response configured content packet.
Step 210: Receive and decrypt the response configured content packet via the slave device 102 to share a network 14 utilized by the master device 100.
Step 212: End.

In the embodiment, the user first connects the master device 100 and the computer system 12, and simultaneously sets the certification mechanism and password (e.g. the service set identification, SSID) corresponding to the network 14 in the master device 100, such that the master device 100 transmits wireless/wired transmission signals in a predetermined range for the computer system 12 or another mobile device (not shown in the figure) to be coupled to the network 14. When the master device 100 finishes the settings of the certification mechanism and password, the computer system 12 will adaptively initiate the configuration process 20, such that the master device 100 and the slave device 102 can share the plurality of packets in the LAN.

In step 202, when the master device 100 has connected to the network 14 and there exists at least one slave device 102 entering into the LAN for processing a configuration of the network 14, the master device 100 will generate the notify configured count packet to be periodically broadcasted for the at least one slave device 102 to process related configuration. Preferably, whenever the master device 100 changes the certification mechanism and password utilized in the network 14, a configuration parameter of the notify configured count packet will be updated. For example, a value of the configuration parameter of the notify configured count packet is 5, and the value will be updated as 6 after one configuration operation of the certification mechanism and password for the network 14 had just finished.

In step 204, when receiving the notify configured count packet, the slave device 102 will check whether the notify configured count packet equals the predetermined notify configured count packet. Preferably, in the embodiment, the slave device 102 can predetermine the predetermined notify configured count packet, where a predetermined network connection parameter for the slave device 102 connecting to the network 14 as well as another certification mechanism and password of the network 14 are contained. When the slave device 102 receives the notify configured count packet from the master device 100, a comparison of configuration parameters in the notify configured count packet as well as the predetermined notify configured count packet is processed. Further, the slave device 102 individually retrieves the configuration parameters in the notify configured count packet as well as the predetermined notify configured count packet to check whether the configuration parameters of the notify configured count packet and the predetermined notify configured count packet are the same or not, so as to determine whether the master device 100 changes the certification mechanism and password of the network 14. If the slave device 102 determines that the configuration parameters of the notify configured count packet and the predetermined notify configured count packet are the same, the slave device 102 will directly utilize the predetermined network connection parameter of the predetermined notify configured count packet to connect to the network 14. If the slave device 102 determines that the configuration parameters of the notify configured count packet and the predetermined notify configured count packet are not the same, step 206 of the configuration process 20 is processed accordingly.

In step 206, since the slave device 102 has determined that the configuration parameters of the notify configured count packet and the predetermined notify configured count packet are not the same, the slave device 102 will generate the request configured content packet. Preferably, in the embodiment, the slave device 102 further utilizes a slave device recognition code to encrypt the request configured content packet before transmission, such that the encrypted request configured content packet can be transmitted from the slave device 102 to the master device 100.

Furthermore, after the encrypted request configured content packet has been transmitted via the slave device 102, the slave device 102 will wait for a predetermined period to determine whether the response configured content packet is correspondingly received from the master device 100. If the slave device 102 fails to receive the response configured content packet from the master device 100 within the predetermined period, the slave device 102 will retransmit the encrypted request configured content packet. Additionally, a retransmission upper limitation value can be predetermined for the slave device 102 for retransmitting the encrypted request configured content packet. When the slave device 102 has retransmitted the encrypted request configured content packet over the retransmission upper limitation value, the slave device will stop retransmitting the encrypted request configured content packet to lower workload of the computer system 12.

In step 208, after the slave device 102 has transmitted the encrypted request configured content packet, the master device 100 will adaptively receive the encrypted request configured content packet to decrypt the encrypted request configured content packet, so as to generate the response configured content packet comprising the certification mechanism and password of the network 14. In detail, in the embodiment, the master device 100 predetermines the slave device recognition code of the slave device 102, such that the master device 100 can utilize the slave device recognition code to successfully decode the encrypted request configured content packet. Certainly, users can operate another programming code in the computer system 12 to obtain the slave device recognition code, so as to dynamically transmit the slave device recognition code to the master device 100 while the slave device 102 has entered the LAN of the master device 100. Also, the master device 100 utilizes a master device recognition code to correspondingly encrypt the response configured content packet comprising the certification mechanism and password of the network 14, so as to transmit the encrypted response configured content packet to the slave device 102.

Noticeably, when the master device 100 does not receive the request configured content packet within another predetermined period, the master device 100 will periodically broadcast the notify configured count packet. Further, if the master device 100 does not receive the request configured content packet within the predetermined period and the user has already updated the certification mechanism and password of the network 14 in the master device 100, the master device 100 will also periodically broadcast the updated notify configured count packet to wait for the determination of whether the slave device 102 transmits the encrypted request configured content packet.

In step 210, after the master device 100 has transmitted the response configured content packet, the slave device 102 will correspondingly receive the encrypted response configured content packet and decrypt the encrypted response configured content packet to retrieve the certification mechanism and password of the network 14 in the encrypted response configured content packet, such that the slave device 102 can share/utilize the network 14 utilized by the master device 100 and set up the connection with network 14. Noticeably, the slave device 102 can predetermine the master device recognition code or receive the master device recognition code via the programming code operated in the computer system 12 once the slave device 102 has entered into the LAN utilized by the master device 100, which means the slave device 100 can automatically receive the master device recognition code of the master device 100 for successfully processing the decoding operation thereon.

In other words, when receiving the response configured content packet, the slave device 102 can obtain the certification mechanism and password of the network 14 utilized by the master device 100 in the response configured content packet, so as to build the connection between the slave device 102 and the network 14. Thus, the user has no need to manually input the current certification mechanism and password utilized by the master device 100, and it is securer and more convenient whenever the user updates the certification mechanism and password, so as to enlarge the application range of the network system 10.

Preferably, the embodiment of the invention provides a configured content packet to be realized in forms of the notify configured count packet and/or the request/response configured content packet utilizing a 0xcb6e format and comprising a master device recognition code, a slave device recognition code and a setup content command, such that the slave device 102 can obtain the certification mechanism and password of the network 14 after receiving the response configured content packet. According to different categories of the LANs or the networks, modifications/adjustments of different packet contents or commands can be expected to comply with different designs of programming codes or hardware switches, such that the at least one slave device 102 can be configured to access the network 14. Accordingly, the slave device 102 can be realized as a plurality of WLAN APs and/or base stations in the network system 10 to provide related wireless signal transmission operations. For example, a mobile device can be freely moved in the range covered by the plurality of WLAN APs and/or base stations of the network system 10, and retrieve the certification mechanism and password of the network 14 once connected to the plurality of WLAN APs and/or base stations , so as to unlimitedly access a plurality of website information/packet from the network 14.

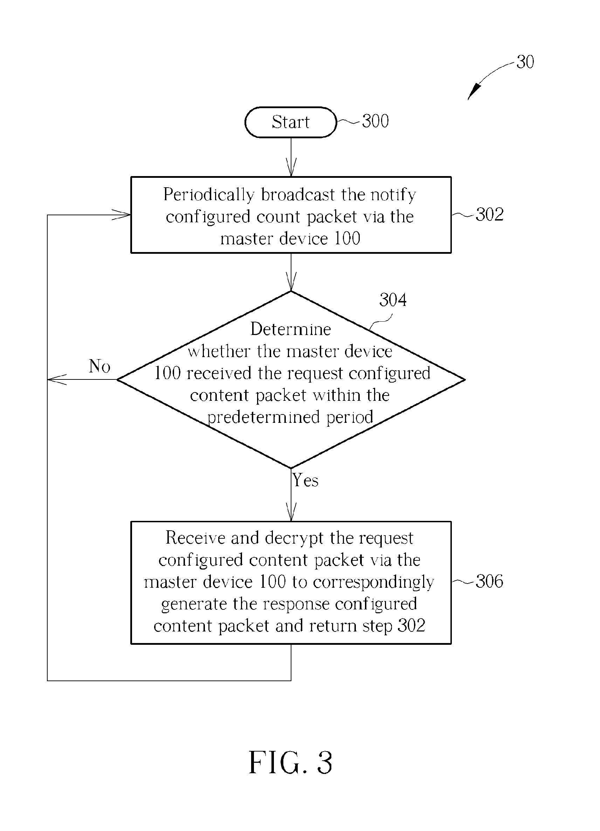

Further, the configuration method for the master device 100 can be summarized as a master device configuration process 30 to be compiled as the programming code in the storage device 122, as shown in FIG. 3. The master device configuration process 30 includes the following steps.
Step 300: Start.
Step 302: Periodically broadcast the notify configured count packet via the master device 100.
Step 304: Determine whether the master device 100 received the request configured content packet within the predetermined period. If yes, process step 306; otherwise, return to step 302.
Step 306: Receive and decrypt the request configured content packet via the master device 100 to correspondingly generate the response configured content packet and return step 302.

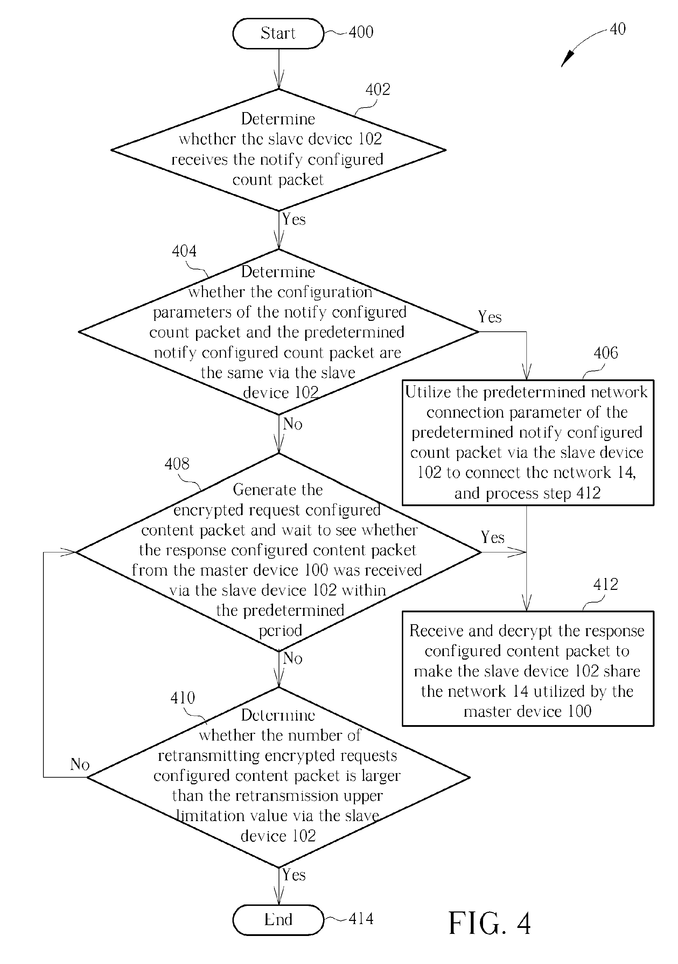

Further, the configuration method for the slave device 102 can be summarized as a slave device configuration process 40 to be compiled as the programming code in the storage device 122, as shown in FIG. 4. The slave device configuration process 40 includes the following steps.
Step 400: Start.
Step 402: Determine whether the slave device 102 receives the notify configured count packet. If yes, process step 404.
Step 404: Determine whether the configuration parameters of the notify configured count packet and the predetermined notify configured count packet are the same via the slave device 102. If yes, process step 406; otherwise, process step 408.
Step 406: Utilize the predetermined network connection parameter of the predetermined notify configured count packet via the slave device 102 to connect the network 14, and process step 412.
Step 408: Generate the encrypted request configured content packet and wait to see whether the response configured content packet from the master device 100 was received via the slave device 102 within the predetermined period. If yes, process step 412; otherwise, process step 410.
Step 410: Determine whether the number of retransmitting encrypted requests configured content packet is larger than the retransmission upper limitation value via the slave device 102. If yes, process step 414; otherwise, process step 408.
Step 412: Receive and decrypt the response configured content packet to make the slave device 102 share the network 14 utilized by the master device 100.
Step 414: End.

Detailed operations of the master device configuration process 30 and the slave device configuration process 40 can be understood in the related paragraphs of the configuration process 20, which are not described again for brevity. Certainly, the master device configuration process 30 and the slave device configuration process 40 can be individually/simultaneously complied as the programming code stored in the storage device 122 to cooperate with the configuration process 20, such that the slave device 102 can share the network 14 utilized by the master device 100. Additionally, another input-output interface of the computer system 12 can be adaptively installed to correspondingly monitor utilization bandwidths of the network 14, so as to adjust transmission amounts of the website information and/or packets or to change a capability number of the plurality of WLAN APs and/or base stations for the network system 10.

Noticeably, the notify configured count packet, the predetermined notify configured count packet and/or the request/response configured content packet in the embodiment are distinctly nominated for illustrating different operations in/for the master device 100 and the slave device 102. In practice, all the mentioned packets can be directly integrated into a single transmission packet for processing the encrypting/decrypting/transmission operations and modifying the configured content commands, so as to make the slave device 102 conveniently retrieve the certification mechanism and password of the network 14.

To sum up, the present invention provides a configuration method of a network system. When a master device has connected to a network, a slave device can utilize the LAN to obtain/share a certification mechanism and password utilized by the master device. In comparison with the prior art, the embodiment of the invention avoids manually inputting the current certification mechanism and password utilized by the master device, and provides more convenient operations for users whenever they need to update the certification mechanism and password of the network, so as to enlarge the application range of the network system.

## Claims

1. A configuration method for a network system (10) comprising a master device (100) and a slave device (102), **characterized by**
broadcasting a notify configured count packet via the master device (100);
receiving the notify configured count packet via the slave device (102) to check whether the notify configured count packet equals a predetermined notify configured count packet;
generating a request configured content packet via the slave device (102) if the notify configured count packet does not equal the predetermined notify configured count packet;
receiving and decrypting the request configured content packet via the master device (100) to correspondingly generate a response configured content packet; and
receiving and decrypting the response configured content packet via the slave device (102) to share a network (14) utilized by the master device (100).

2. The configuration method of claim 1, **characterized in that** the step of broadcasting the notify configured count packet via the master device (100) further comprises:
broadcasting the notify configured count packet after the master device (100) connects with the network (14), and simultaneously updating a configuration parameter corresponding to the notify configured count packet.

3. The configuration method of claim 1, **characterized in that** the step of receiving the notify configured count packet via the slave device (102) to check whether the notify configured count packet equals the predetermined notify configured count packet further comprises:
if the notify configured count packet equals the predetermined notify configured count packet, the master device (100) utilizing a predetermined network connection parameter corresponding to the predetermined notify configured count packet to process a network connection operation.

4. The configuration method of claim 1, **characterized in that** the step of generating the request configured content packet via the slave device (102) if the notify configured count packet does not equal the predetermined notify configured count packet further comprises:
utilizing a slave device recognition code of the slave device (102) to encrypt the request configured content packet, so as to transmit the encrypted request configured content packet; and
the slave device (102) waiting for a predetermined period after transmitting the encrypted request configured content packet.

5. The configuration method of claim 1, **characterized in that** the step of receiving and decrypting the request configured content packet via the master device (100) to correspondingly generate the response configured content packet further comprises:
utilizing a master device recognition code of the master device (100) to encrypt the response configured content packet, so as to transmit the encrypted response configured content packet;
wherein when the master device (100) does not receive the request configured content packet, the master device (100) periodically broadcasts an updated notify configured count packet.

6. The configuration method of claim 1, **characterized in that** the step of receiving and decrypting the response configured content packet via the slave device (102) to share the network (14) utilized by the master device (100) further comprises:
if the slave device (102) does not receive the response configured content packet, the slave device (102) retransmits the request configured content packet.

7. The configuration method of claim 1, **characterized by** a configured content packet to be realized in forms of the notify configured count packet and/or the request/response configured content packet utilizing a 0xcb6e format and including a master device recognition code, a slave device recognition code and a setup content command.

8. A computer system (12) coupled to a network system (10) comprising a master device (100) and a slave device (102), **characterized by**
a central processing unit (120); and
a storage device (122) coupled to the central processing unit (120) storing a programming code, and the programming code is utilized to instruct the central processing unit (120) to process a configuration method, the configuration method comprising:
broadcasting a notify configured count packet via the master device (100);
receiving the notify configured count packet via the slave device (102) to check whether the notify configured count packet equals a predetermined notify configured count packet;
generating a request configured content packet via the slave device (102) if the notify configured count packet does not equal the predetermined notify configured count packet;
receiving and decrypting the request configured content packet via the master device (100) to correspondingly generate a response configured content packet; and
receiving and decrypting the response configured content packet via the slave device (102) to share a network (14) utilized by the master device (100).

9. The computer system of claim 8, **characterized in that** the step of broadcasting the notify configured count packet via the master device (100) further comprises:
broadcasting the notify configured count packet after the master device (100) connects with the network (14), and simultaneously updating a configuration parameter corresponding to the notify configured count packet.

10. The computer system of claim 8, **characterized in that** the step of receiving the notify configured count packet via the slave device (102) to check whether the notify configured count packet equals the predetermined notify configured count packet further comprises:
if the notify configured count packet equals the predetermined notify configured count packet, the master device (100) utilizes a predetermined network connection parameter corresponding to the predetermined notify configured count packet to process a network connection operation.

11. The computer system of claim 8, **characterized in that** the step of generating the request configured content packet via the slave device(102) if the notify configured count packet does not equal the predetermined notify configured count packet further comprises:
utilizing a slave device recognition code of the slave device (102) to encrypt the request configured content packet, so as to transmit the encrypted request configured content packet; and
the slave device (102) waits a predetermined period after transmitting the encrypted request configured content packet.

12. The computer system of claim 8, **characterized in that** the step of receiving and decrypting the request configured content packet via the master device (100) to correspondingly generate the response configured content packet further comprises:
utilizing a master device recognition code of the master device (100) to encrypt the response configured content packet, so as to transmit the encrypted response configured content packet;
wherein when the master device (100) does not receive the request configured content packet, the master device (100) periodically broadcasts an updated notify configured count packet.

13. The computer system of claim 8, **characterized in that** the step of receiving and decrypting the response configured content packet via the slave device (102) to share the network (14) utilized by the master device (100) further comprises:
if the slave device (102) does not receive the response configured content packet, the slave device (102) retransmits the request configured content packet.

14. The computer system of claim 8, **characterized in that** a configured content packet is realized in forms of the notify/request/response configured content packet which utilizes a 0xcb6e format and comprises a master device recognition code, a slave device recognition code and a setup content command.

15. The computer system of claim 8, **characterized in that** the master device (100) and the slave device (102) are realized as a wireless local area network access point (WLAN AP) or a base station.
